# EUROPEAN PATENT APPLICATION

(11) **EP 2 261 905 A1**
(43) Date of publication of application: **15.12.2010**
(21) Application number: 09305537.4
(22) Date of filing: 12.06.2009
(51) Int. Cl.: G11B 7/26, G11B 7/243

(54) **Compatible optical recording medium**

(71) Applicant: Thomson Licensing, 92130 Issy-les-Moulineaux (FR)
(72) Inventor: Barth, Dieter, 78048, Villingen-Schwenningen (DE); Fery, Christophe, 78078, Niederreschach (DE); Kimmelmann, Stefan, 78052, Villingen-Pfaffenweiler (DE); Khrushchev, Sergey, 78089, Unterkirnach (DE)
(74) Representative: Schmidt-Uhlig, Thomas

(57) **Abstract**

The present invention relates to a format of a recordable optical recording medium (8), which is designed in such a way that it can be read by any standard player and recorder, and to a method for manufacturing such an optical recording medium (8). According to the invention, the optical recording medium (8) has a recording layer with an active layer (82), which is composed of at least Pd, O, Te, and Cu. The active layer (82) is fabricated by reactive sputtering of a PdTe target and a Cu target within an O₂/Ar atmosphere.

## Description

The present invention relates to a format of a recordable optical recording medium, which is designed in such a way that it can be read by any standard player and recorder, and to a method for manufacturing such an optical recording medium.

The distribution of digital data such as movies or software on optical recording media today is established as the main distribution channel. However, this means that stores need to stock a large amount of titles in order to be able to provide most requested titles immediately to their customers without having to order them.

In order to reduce this need for a large stock several solutions for a manufacturing on demand or a distribution via networks have been proposed. The optical recording medium, typically a DVD (digital versatile disk), is recorded as soon as a title is requested by a customer. Recording is done with a special recorder provided in a store, with a kiosk type recording terminal, or by a special consumer recorder connected to a network. These special recorders allow to write data to a recordable DVD in such a way that the DVD has the appearance of a CSS-encrypted DVD-Video (ROM) disk, even though it is a specially finalized recordable DVD.

In order to establish the above described solutions as further distribution channels, the recorded optical recording media have to be compatible with as many standard players and recorders as possible. Unfortunately, unlike pre-recorded optical recording media, such as DVD-ROM, CSS-encrypted recordable DVD media (DVD+/-R/RW) do not show a 100% playability rate on consumer players and recorders. This is mainly due to the use of different tracking methods for pre-recorded media (usually DPD, differential phase detection) and recordable media (usually DPP, differential push-pull).

In order to achieve an improved compatibility, a special format for an optical recording medium, named DVD-Download, has been proposed, e.g. in EP 1 933 313. During recording with a blue laser wavelength (405nm) this optical recording medium provides a tracking signal conforming to a recordable DVD, while during reading with a red laser wavelength (650nm) a tracking signal conforming to a pre-recorded DVD is generated.

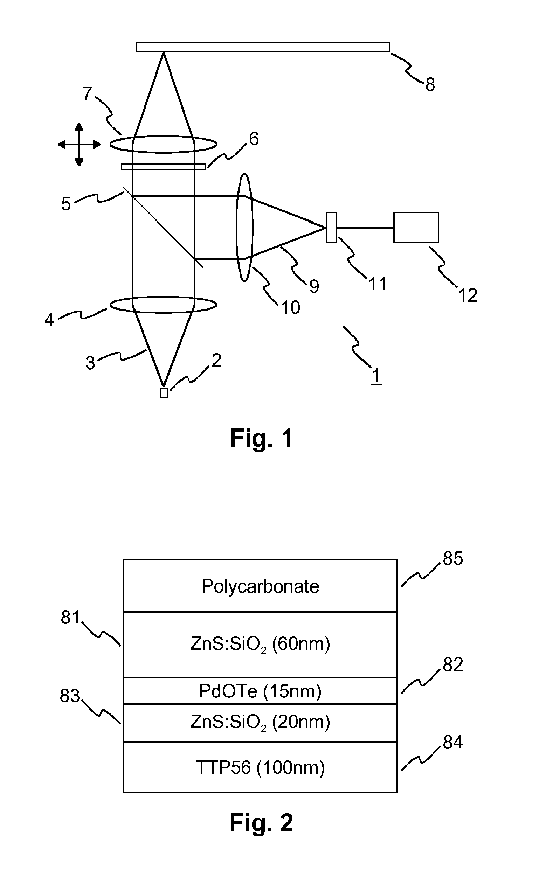

Several solutions have been developed for write-once optical recording media having excellent write/read performances with a blue wavelength. For example, EP 1 180 767 describes a stack of four layers with a recording layer containing Te, O and Pd. However, the various architectures disclosed in this document are only for recording and reading at the same wavelength. Tests have shown that the PdOTe stack does not allow to fulfill the requirements of the DVD-ROM format when reading-out at 650nm information that was recorded at 405nm (see Fig. 2 and Table 2). The DVD-ROM format is defined, for example, in Standard ECMA-267: "120 *mm DVD - Read-Only Disk*".

Also, US 7,018,695 describes a layer stack using a Cu/Si bilayer as a recording layer, where recording and read-out is performed at 405nm.

Furthermore, WO 2009/040239 discloses an improved Cu/Si-based stack that allows proper read-out at 650nm. However, the DVD-ROM format is not fully fulfilled, as the modulation remains below 60%.

It is an object of the invention to propose an improved recordable optical recording medium, which is suitable for recording using a blue wavelength around 405nm and reading using a red wavelength around 650nm.

According to the invention, this object is achieved by an optical recording medium with a recording layer having an active layer composed of at least Pd, O, and Te, which further includes Cu. Preferably, the active layer has a thickness between 10 and 20nm. The addition of Cu leads to a significant reduction of the jitter value. This allows to obtain a recordable optical recording medium, which after recording fulfills the specifications of a DVD-ROM. The active layer is favorably fabricated by reactive sputtering of a PdTe target, e.g. a Pd₂₂Te₇₈ target, and a Cu target within an O₂/Ar atmosphere. The co-sputtering of a Cu target together with a PdTe target can easily be implemented in existing production lines.

Advantageously, the composition of the active layer is PdₓO_{y}Te_{z}Cu_{w}, with 50%<y<65% and (x+w) <35%, preferably Pd₉O₅₅Te₃₀Cu₆ or Pd₈O₆₀Te₂₇Cu₅. The specific composition can easily be obtained by adapting the composition of the O₂/Ar atmosphere. While a Pd₉O₅₅Te₃₀Cu₆ active layer already fulfills the necessary requirements regarding reflectivity, modulation and jitter, a Pd₈O₆₀Te₂₇Cu₅ active layer additionally has an increased stability.

Favorably, the active layer is sandwiched between a first dielectric layer and a second dielectric layer. The first dielectric layer preferably is a ZnS:SiO₂ dielectric layer with a thickness around 60nm. Likewise, the second dielectric layer preferably is a ZnS:SiO₂ dielectric layer with a thickness around 20nm. The dielectric layers allow to adjust the reflectivity of the layer stack for both 405nm and 650nm. The thickness values are a trade-off that ensures that the reflectivity at 405nm is minimum and the reflectivity at 650nm is above the value required by the specification, i.e. above 45%. Minimizing the reflectivity at 405nm allows to reduce the writing power while still enabling recording.

For a better understanding the invention shall now be explained in more detail in the following description with reference to the figures. It is understood that the invention is not limited to this exemplary embodiment and that specified features can also expediently be combined and/or modified without departing from the scope of the present invention. In the figures:
- Fig. 1: schematically shows a pickup for reading from an optical recording medium;
- Fig. 2: shows a recordable optical recording medium using a stack with four layers;
- Fig. 3: depicts the influence of the thicknesses of the dielectric layers on the reflectivity at 405nm;
- Fig. 4: depicts the influence of the thicknesses of the dielectric layers on the reflectivity at 650nm;
- Fig. 5: shows the n and k values measured at 650nm for different oxygen contents;
- Fig. 6: depicts reflectivity measurements for the recordable optical recording medium of Fig. 2 for different oxygen contents;
- Fig. 7: shows beam modulation measurements for the optical recording medium 8 of Fig. 2 for different oxygen contents,
- Fig. 8: illustrates the preferred chemical composition of the PdOTe layer, and
- Fig. 9: depicts the preferred chemical composition of a PdOTeCu layer according to the invention.

In Fig. 1 a pickup 1 for reading from an optical recording medium 8 is shown schematically. A laser diode 2 emits a linearly polarized light beam 3, which is collimated by a collimator lens 4. The collimated light beam 3 passes a polarization beam splitter 5 and a quarter wave plate 6, which transforms the light beam 3 into a circular polarized light beam 3, before it is focused onto an optical recording medium 8 by an objective lens 7. The light beam 9 reflected by the optical recording medium 8 is collimated by the objective lens 7 and passes the quarter wave plate 6, which transforms the reflected light beam 9 into a linear polarized light beam 9. Due to the quarter wave plate 6, the direction of polarization of the reflected light beam 9 is perpendicular to the direction of polarization of the initial light beam 3. The reflected light beam 9 is thus deflected by the polarization beam splitter 5 towards a focusing lens 10, which focuses the reflected light beam 9 onto a detector 11. An evaluation circuitry 12 evaluates the signals obtained by the detector 11.

In order to optimize the performance for a DVD-Download application, an optical recording medium 8 based on EP 1 180 767 was investigated in detail. The following Table 1 summarizes the relevant parameters required by the DVD-ROM specification in Standard ECMA-267: "120 *mm DVD - Read-Only Disk".*

**Table 1**

| Reflectivity [%] | Modulation I₁₄/I_{14H} [%] | Jitter [%] | Resolution I₃/I₁₄ [%] | Asymmetry [%] | Push-Pull [%] |
|---|---|---|---|---|---|
| ≥45 | ≥60 | <8 | ≥15 | ≤15 | ≤9 |

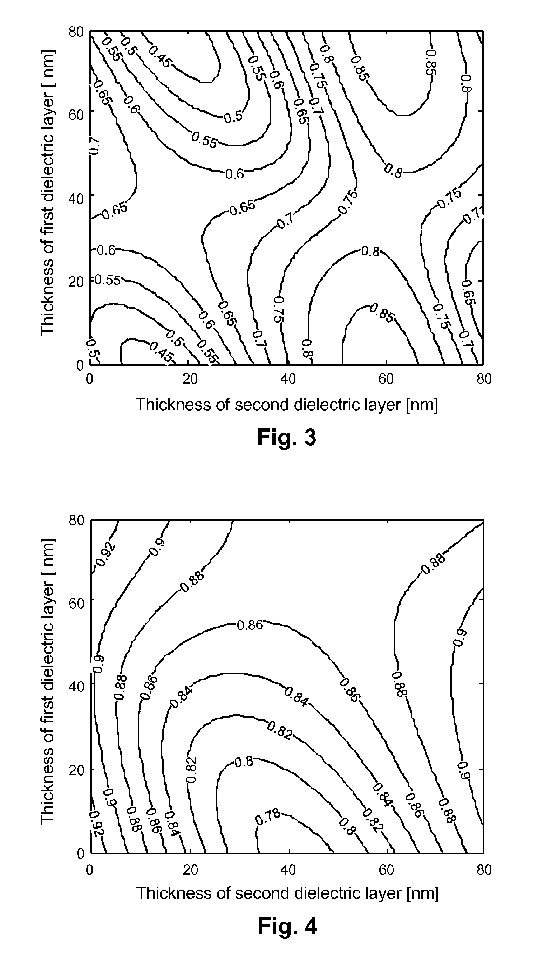

The layer stack of the optical recording medium 8 is depicted in Fig. 2. The layer stack has four layers 81, 82, 83, 84 arranged on a polycarbonate substrate 85, namely a first ZnS:SiO₂ dielectric layer 81, a 15nm PdOTe active layer 82, a second ZnS:SiO₂ dielectric layer 83, and a 100nm layer 84 made of the Ag alloy TTP56. The thicknesses of the dielectric layers 81 and 83 were chosen such that the reflectivity at 405nm was minimum, in order to reduce the writing power, while the reflectivity at 650nm was above the value required by the specification, i.e. >45%. Fig. 3 and Fig. 4 show the influence of the layer thickness on the reflectivities at 405nm and 650nm, respectively. After several optimization steps it was found that the optimal trade-off was a thickness of around 60nm for the first dielectric layer 81 and a thickness of around 20nm for the second dielectric layer 83.

The various layers were deposited by sputtering. The active PdOTe layer 82 was obtained by reactive sputtering of a Pd₂₂Te₇₈ target in an Ar/O₂ atmosphere. Different samples were deposited at various O₂ partial pressures.

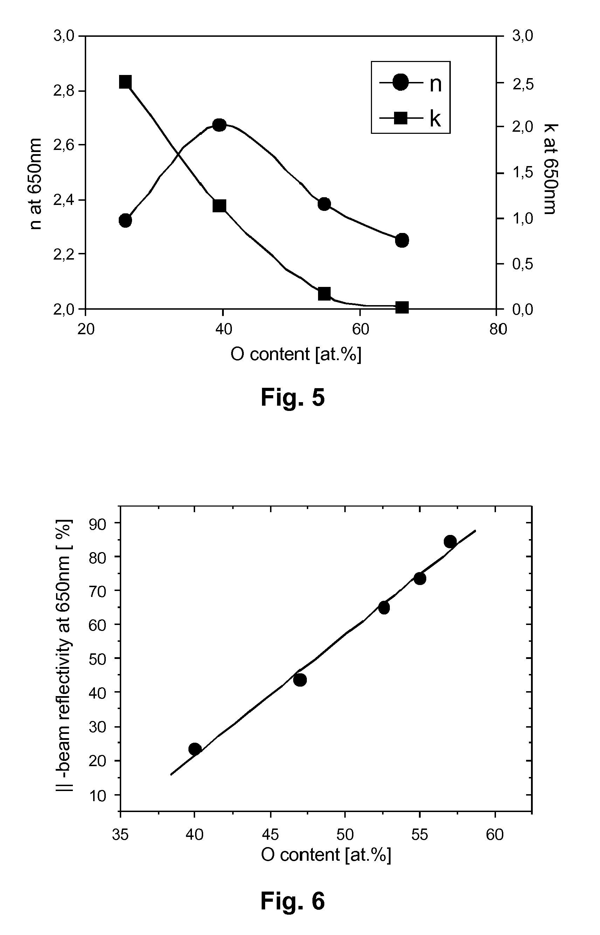

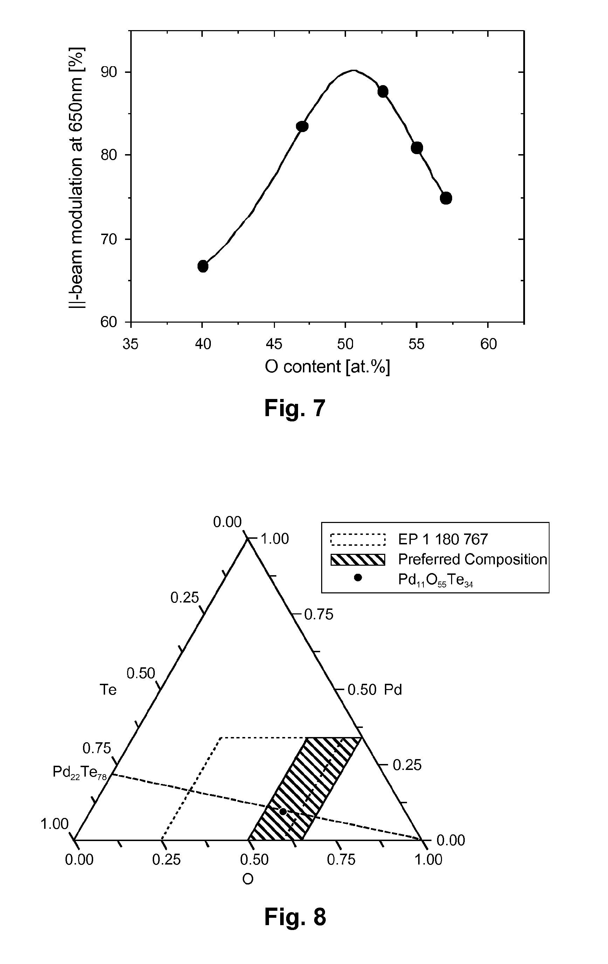

Fig. 5 shows the n and k values measured at 650nm for various oxygen contents, where n and k are the real part and the imaginary part of the refractive index, respectively. When k→0 (high oxygen content), the material behaves more and more like a dielectric material, which leads to a poor modulation (cf. Fig. 7). If k is too high (low oxygen content), the material behaves more and more like a metal and the reflectivity is too low (cf. Fig. 6).

The preferred chemical composition of the PdOTe layer 82 is indicated by the hatched area in the composition triangle shown in Fig. 8. The area encompassed by the dashed line corresponds to the chemical composition proposed in EP 1 180 767.

Fig. 6 shows reflectivity measurements for the optical recording medium 8 of Fig. 2 for different oxygen contents in the active layer 82. Drawn is the parallel beam reflectivity in percent at a wavelength of 650nm against the oxygen content in atomic percent (at.%). In order to comply with the DVD-ROM standard the focused beam reflectivity has to be above 45%. Therefore, as can be seen from Fig. 6, the oxygen content has to be greater than 50 at.%.

Depicted in Fig. 7 are beam modulation measurements for the optical recording medium 8 of Fig. 2 for different oxygen contents in the active layer 82. Drawn is the parallel beam modulation in percent at a wavelength of 650nm against the oxygen content in atomic percent. The modulation is obtained from the reflectivity change upon annealing (ramping from room temperature up to 200°C) of the four layer stack. As can be seen, when the oxygen content is too high, the active layer 82 tends to become dielectric. This leads to a drop of modulation upon heating. Therefore, the oxygen content is preferably kept below 65at.%.

Table 2 summarizes the results of electrical tests performed with the layer stack of Fig. 2, i.e. using a PdOTe active layer 82. The composition of the active layer 82 was Pd₁₁O₅₅Te₃₄. Right after deposition the values of n and k measured at 650nm are n≈2.4 and k≈0.17.

Recording was performed with an HD-DVD tester at a wavelength of 405nm and a numerical aperture (NA) of 0.65. Read-out was performed with a DVD-ROM tester at a wavelength of 650nm and a numerical aperture of 0.65. Although most of the parameters were compliant with the DVD-ROM standard, it was impossible to achieve a data-to-clock jitter below 8%.

**Table 2**

| Reflectivity [%] | Modulation [%] | Jitter [%] | Resolution [%] | Asymmetry [%] | Push-Pull (after recording) [%] |
|---|---|---|---|---|---|
| 52 | 73 | 12 | 20 | 3.7 | ≤9 |

According to the invention, Cu is added to the PdOTe layer 82 such that the composition of the active layer is PdₓO_{y}Te_{z}Cu_{w}, with 50%<y<65% and (x+w)<35%. The addition of Cu leads to a significant reduction of the jitter value. Table 3 summarizes the results of electrical tests performed with a first exemplary PdOTe active layer that contains about 6at.% of Cu. This composition was obtained by co-sputtering a Cu target with the Pd₂₂Te₇₈ target within the O₂/Ar atmosphere. The composition of the active layer 82 was found to be about Pd₉O₅₅Te₃₀Cu₆. Right after deposition the values of n and k measured at 650nm are n≈2.4 and k≈0.19.

**Table 3**

| Reflectivity [%] | Modulation [%] | Jitter [%] | Resolution [%] | Asymmetry [%] | Push-Pull (after recording) [%] |
|---|---|---|---|---|---|
| 56 | 64 | 7.7 | 29 | 7.5 | ≤9 |

A further improvement of the optical recording medium 8 is achieved by slightly increasing the oxygen content of the active layer 82. The increased oxygen content stabilizes the active layer 82. Otherwise, the active layer 82 might degrade after some time, so that eventually the jitter value exceeds 8%. Table 4 summarizes the results of electrical tests performed with a second exemplary PdOTe active layer 82 that contains 60at.% of o. The composition of the active layer is about Pd₈O₆₀Te₂₇Cu₅. Right after deposition the values of n and k measured at 650nm are n≈2.4 and k≈0.14. This composition leads to a dramatically increased stability of the active layer.

**Table 4**

| Reflectivity [%] | Modulation [%] | Jitter [%] | Resolution [%] | Asymmetry [%] | Push-Pull (after recording) [%] |
|---|---|---|---|---|---|
| 58 | 82 | 7.7 | 27 | 5.1 | ≤9 |

Fig. 8 depicts the composition triangle diagram for the PdOTe layer 82 without the addition of Cu. The preferred chemical composition is indicated by the hatched area. The bottom axis shows the fraction of O, the left axis shows the fraction of Te, and the right axis shows the fraction of Pd. The area encompassed by the dashed line corresponds to the chemical composition proposed in EP 1 180 767. The measurement results summarized in Table 2 were obtained with Pd₁₁O₅₅Te₃₄, which is indicated by the black circle.

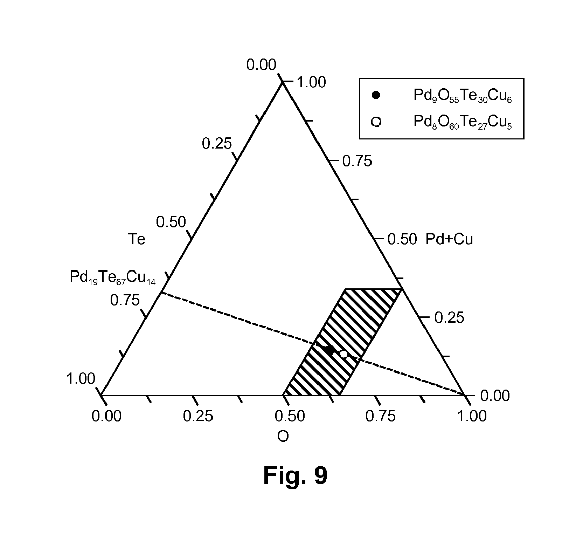

Fig. 9 depicts the composition triangle diagram for the PdOTeCu layer 82. Also in this diagram the hatched area indicates the preferred chemical composition. The bottom axis shows the fraction of O, the left axis shows the fraction of Te, and the right axis shows the fraction of Pd+Cu. The measurement results summarized in Table 3 were obtained with Pd₉O₅₅Te₃₀Cu₆, which is indicated by the black circle. The measurement results of Table 4 were obtained with Pd₈O₆₀Te₂₇Cu₅, indicated by the white circle.

The dashed lines in Figs. 8 and 9 mark the possible compositions that can be obtained by varying the oxygen content, i.e. by adapting the partial O₂ pressure during the deposition of the recording layer 82. The intersection of those lines with the left axis gives the chemical composition of the sputtering targets used for the deposition of the recording layer 82. Of course, it is likewise possible to use different sputtering targets, as long as the composition of the resulting deposited recording layer lies within the specified range of values.

## Claims

1. Optical recording medium (8) with a recording layer having an active layer (82) composed of at least Pd, O, and Te, **characterized in that** the active layer (82) further includes Cu.

2. Optical recording medium (8) according to claim 1, **wherein** the composition of the active layer (82) is PdₓO_{y}Te_{z}Cu_{w}, with 50%<y<65% and (x+w)<35%.

3. Optical recording medium (8) according to claim 1 or 2, **wherein** the composition of the active layer (82) is Pd₉O₅₅Te₃₀CU₆ or Pd₈O₆₀Te₂₇CU₅.

4. Optical recording medium (8) according to one of claims 1 to 3, **wherein** the active layer has a thickness between 10 and 20nm.

5. Optical recording medium (8) according to one of the preceding claims, **wherein** the active layer (82) is sandwiched between a first dielectric layer (81) and a second dielectric layer (83).

6. Optical recording medium (8) according to claim 5, **wherein** the first dielectric layer (81) is a ZnS:SiO₂ dielectric layer with a thickness around 60nm and/or the second dielectric layer (83) is a ZnS:SiO₂ dielectric layer with a thickness around 20nm.

7. Method for manufacturing an optical recording medium (8), **having** the step of fabricating an active layer (82) by reactive sputtering of a PdTe target and a Cu target within an O₂/Ar atmosphere.

8. Method according to claim 7, **wherein** the PdTe target is a Pd₂₂Te₇₈ target.

9. Method according to claim 7 or 8, **wherein** the composition of the O₂/Ar atmosphere is adapted such that the composition of the active layer (82) is PdₓO_{y}Te_{z}Cu_{w}, with 50%<y<65% and (x+w)<35%.

10. Method according to one of claims 7 to 9, **wherein** the composition of the O₂/Ar atmosphere is adapted such that the composition of the active layer (82) is Pd₉O₅₅Te₃₀Cu₆ or Pd₈O₆₀Te₂₇Cu₅.

11. Method according to one of claims 7 to 10, **further** having the step of forming a first dielectric layer (81) above the active layer (82) and a second dielectric layer (83) below the active layer (82).

12. Method according to claim 11, **wherein** the first dielectric layer (81) is a ZnS:SiO₂ dielectric layer with a thickness around 60nm and/or the second dielectric layer (83) is a ZnS:SiO₂ dielectric layer with a thickness around 20nm.
